(19) Europäisches Patentamt
European Patent Office
Office européen des brevets

(11) **EP 1 444 120 B1**

(12) **EUROPEAN PATENT SPECIFICATION**

(45) Date of publication and mention
of the grant of the patent:
**16.03.2011 Bulletin 2011/11**

(21) Application number: **02768917.3**

(22) Date of filing: **26.09.2002**

(51) Int Cl.:
***B60T 8/36*** (2006.01)   ***G05D 16/20*** (2006.01)

(86) International application number:
**PCT/US2002/030962**

(87) International publication number:
**WO 2003/026941 (03.04.2003 Gazette 2003/14)**

(54) **BOUNDARY AUTO-CALIBRATION SCHEME FOR PROPORTIONAL POPPET VALVE PRESSURE CONTROL**

VERFAHREN ZUR AUTOMATISCHEN KALIBRIERUNG DER VENTILKENNLINIE BEI DRUCKREGELUNG EINES PROPORTIONAL-SITZVENTILS

PLAN D'AUTO-ETALONNAGE DE LIMITE POUR COMMANDE DE PRESSION DE SOUPAPE CHAMPIGNON PROPORTIONNELLE

(84) Designated Contracting States:
**AT BE BG CH CY CZ DE DK EE ES FI FR GB GR IE IT LI LU MC NL PT SE SK TR**

(30) Priority: **26.09.2001 US 965103**

(43) Date of publication of application:
**11.08.2004 Bulletin 2004/33**

(73) Proprietor: **KELSEY-HAYES COMPANY
Livonia, MI 48150 (US)**

(72) Inventors:
• **ZHENG, Yuhong
Ann Arbor, MI 48103 (US)**
• **SONG, Wenwei
Ann Arbor, MI 48105 (US)**
• **MILOT, Danny, R.
Ann Arbor, MI 48105 (US)**

(74) Representative: **Schmidt, Steffen J.
Wuesthoff & Wuesthoff
Patent- und Rechtsanwälte
Schweigerstrasse 2
81541 München (DE)**

(56) References cited:
EP-A- 0 233 360     WO-A-02/26540
DE-A- 3 636 140     DE-A- 3 833 881
DE-A- 10 200 771    DE-A- 19 936 269
US-A- 5 560 688     US-A- 6 030 055

EP 1 444 120 B1

**Description**

BACKGROUND OF THE INVENTION

This invention relates in general to proportional poppet valve control and, in particular, to an auto-calibration scheme for poppet valves in an electrohydraulic brake system. Poppet valves can be used in electrohydraulic brake systems to control the pressure of brake fluid applied to vehicle wheel brakes.

Traditionally, proportional poppet valves are operated in a manner proportional to the voltage applied to the valve's controlling solenoid. The valves are either closed, opened, or are in some intermediate position. Normally this prevents or allows a fluid to pass from one side of the valve to the other. As it relates to this invention, valves either allow or prevent hydraulic fluid flow in a hydraulic circuit, specifically in a hydraulic circuit in a brake system. An electrohydraulic braking (EHB) system utilizes electronically controlled valves, pumps, or a combination thereof to augment, replace, or control the base braking operation of a vehicle brake system. Base braking, sometimes referred to as foundation braking, is the basic braking called for by the operator of a vehicle. In base braking, the brake pedal operates a master cylinder, causing the master cylinder to send pressurized hydraulic brake fluid to the wheel brakes of a vehicle. Advanced braking systems, such as EHB systems, have been used to improve the performance of vehicle braking systems by augmenting or replacing the base braking function with other braking operations.

One of the first of many advanced braking functions that has been developed for vehicles was an Antilock Braking System (ABS), which typically involves the operation of valves and pumps to selectively release and re-apply brakes during a braking operation. While typical base braking is commanded by the operator; ABS braking controls the vehicle brakes to recover from and limit skidding of a vehicle's wheels due to braking the wheels harder than permitted by the available coefficient of friction of the road surface. Since pumps and valves are electronically controlled to augment the base braking operation, a vehicle equipped with ABS may generally be said to have an EHB system.

Another advanced braking function that may be accomplished by a properly configured EHB system is VSC (Vehicle Stability Control), which is a system for selectively actuating vehicle brakes to improve the stability of a vehicle during vehicle maneuvers. Other braking applications producing a pressure command input to the present invention include DRP (Dynamic Rear Proportioning - a system for controlling the front to rear proportioning of a vehicle braking command), TC (Traction Control - which typically involves selective application of brakes during vehicle acceleration to recover from and limit skidding of a vehicle's wheels due to accelerating the wheels faster than permitted by the available coefficient of friction of the road surface), ACC (Autonomous Cruise Control - a cruise control system that can actuate vehicle brakes to maintain proper vehicle spacing relative to a vehicle in front) and similar functions.

A subset of electrohydraulic braking systems is electronic brake management (EBM). EHB systems can allow braking to be primarily controlled by the vehicle driver with a conventional master cylinder system. Additionally, an electronically controlled portion of the system operates the brakes under certain conditions, i.e. anti-lock, traction control, etc. In Electronic Brake Management systems, primary braking is controlled electronically. In an EBM system, the vehicle driver or a safety system generates an electronic signal, which in turn operates the pumps and valves to achieve a braking pressure within the system. A pedal simulator creates the effect for the driver of applying direct braking pressure while also providing a back-up braking system in case of a failure of the primary system. In the back-up system, the pedal simulator acts as a master cylinder during the failure event and provides the hydraulic pressure that actuates the brakes.

Regardless of the type of electrohydraulic braking system that is used, a system with proportional poppet valves has a control process that controls whether the valves are opened, closed or intermediately positioned. In order for a control system to properly control the poppet valves, it must be configured to account for the forces acting on the valves, the natural characteristics of the valves and be able respond to changes in the valve during braking operations.

Proportional poppet valves used in the above-described systems typically comprise a valve armature, a valve seat, and a spring. If an electric current controls the valve, there generally is a solenoid that acts upon a magnet causing the valve armature to be raised from or seated upon the valve seat. Because a valve can be normally open or normally closed, there are different forces acting upon the valve in its default position. Generally, such forces can be a magnetic force, a spring force, an inlet pressure force, or an outlet pressure force. The inlet and outlet pressure forces will ordinarily vary depending upon the load demanded within the system. In that voltage is proportional to current, it is understood that the use of current controls are to be within the scope of the claims of the present invention.

To balance the forces that are naturally occurring on the valve, so that a particular valve is either normally opened or normally closed, the closing boundary must be determined. A closing boundary also compensates for deadband in the system. Deadband compensation is used to reduce delays in valve response to an applied voltage when the valve is in its normal position. In proportional poppet valve pressure controls, a closing boundary is defined as the minimal (for normally open valves) or maximal (for normally closed valves) voltage required to keep an armature assembly in contact with the seat. Cloning boundary data, as used for deadband compensation, gives minimal ramp lags but is dependent on how accurately the closing boundary is set. Several factors make it difficult to accurately set the closing boundary under all operating conditions. First, it is difficult to accurately measure the closing boundary. Second, the actual closing boundary changes in a time-variant manner due to operating pressure, temperature and potentially other naturally occurring phenomena. Lastly, the actual boundary varies from one valve to another because of manufacturing tolerances. Proportional poppet valve pressure control systems are very sensitive to inaccuracies in the closing boundary. This high sensitivity can be justified by the fact that poppet valve systems have a far smaller effective control band at a given pressure than systems with spool valves. Another difference between the two-valve system and the one-valve system is that the two-valve system utilizes an apply valve and a release valve to modulate the brake pressure at each wheel. Therefore, boundary variations in any one of the two valves can affect braking performance at a wheel.

One method that can be used to account for variations in multiple valves at one time is a lump-sum method. However, there is a limitation in using lump-sum estimation of boundary variation. The lump-sum approach generally achieves good pressure tracking performance but the system could converge to equilibrium where one valve is not closed while the other is supposed to be open. The degree of the problem in such a system varies with the amount of boundary variation. Another drawback is that given non-linearities in flow gain at a given pressure, the lump-sum effect of boundary variations in two valves would change rapidly whenever there is a change in the valve state (open and closed). As a result, every time there is a change in the valve state, transients are induced.

To exhibit ideal performance in a system, each valve would have to be trimmed individually to match the closing boundary. This individualized tailoring process is time-consuming and expensive to conduct for a mass-produced system. Therefore, it is important to devise a boundary auto-calibration scheme to produce the system in a cost-effective manner.

U.S. Patent 6,086,167 to Heckmann, et al. describes a method and device for regulating wheel brake pressure. Pressure is regulated by a regulator generating a driving signal quantity for a pressure-influencing valve arrangement on the basis of the active operating point of the valve arrangement. Given a pressure differential across the valve arrangement, the operating point can be determined from a predetermined current-pressure characteristic curve. The characteristic curve essentially defines a point (at or near zero flow) from which up or down hydraulic flow is utilized to regulate wheel brake pressure. The boundary addressed in the present invention is the watershed between hydraulic bulk flow and leakage flow, both of which are utilized for wheel brake pressure control.

US 6,030,055 describes a method for regulating an actual pressure in a wheel brake. The actual pressure is changed by a valve arrangement, in response to an activation current. A deviation of the actual pressure from a pressure command signal and a pressure difference across the valve arrangement is determined. The activation current is generated, depending on the deviation and the pressure difference. Then, a correlation between the activation current and the pressure difference is stored, and a correction signal as a function of the pressure command signal and the actual pressure is formed. The pressure command signal is corrected by the correction signal, and the correlation is modified as a function of a magnitude of the correction signal.

EP 0 233 360 A2 describes a method employing a regulator for controlling a pressure in a brake cylinder by a solenoid-controlled valve. The regulator provides the actuating variable to a computer for compensation of the hysteresis of the valve. For each of the three operation modes for pressure build up, pressure hold, and pressure release the computer employs one of three characteristic curves. The actual operation mode is detected by a first and a second comparator which select the characteristic curve dedicated to the corresponding operation mode. The second comparator selects between the characteristic curves for pressure build up and pressure release, depending on the sign of the change of the actuating variable.

DE 199 36 269 A1 describes a method for regulating the charging-air pressure of a turbocharger employing a characteristic diagram, wherein an entry of a characteristic diagram is corrected dynamically upon recognition of a stabilized regulating operation.

U.S. Patent 6,030,055 to Schubert improves upon the quality of the pressure control system described in U.S. Patent 6,086,167 and makes manual determination and adjustment of the characteristic curves unnecessary. Primarily, Schubert's invention is based upon the alternative exemplary embodiment of U.S. Patent 6,086,167, where a regulator based on pressure difference between reference pressure and actual wheel brake pressure outputs a pressure correction quantity to the reference pressure, and the corrected reference pressure in turn is used to find activation current from the current-pressure characteristic curve. Schubert describes a process that automatically equalizes the correlation between the pressure difference at a valve and the activation current. The correction quantity occurring in the course of a regulation operation is held within defined limits by appropriate adaptation of the characteristic curves. The limits of the correction quantity are determined as a function of the actual wheel brake pressure and the dynamic ratio of the reference pressure. The characteristic curve for the apply valve is modified during pressure buildup and the characteristic curve for the release valve is modified during pressure reduction.

An estimation approach that estimates boundary deviation should disregard performance changes due to other factors. A system that does disregard such other factors would be beneficial in achieving consistent and convergent estimation. Therefore, an estimation approach based on a different philosophy than that of the patents listed above would provide a more accurate response to a pressure command signal. Consistent estimation would in turn help generate consistent pressure control performance for different types of pressure commands. Additionally, it would be advantageous to implement a calibration scheme that could estimate the boundary values quickly and accurately, for example, for calibration during the manufacturing process.

## SUMMARY OF THE INVENTION

This invention relates to a method for adapting a closing boundary according to claim 1. Further embodiments are disclosed in the dependent claims. The method comprises implementing an estimator including an integral element to estimate boundary variations of the valve. This entails using the sign of the pressure command derivative over time to determine which one of the two estimators for a wheel should be updated. Next a modified pressure error is calculated in such a way that steady state pressure error, resulting from feedforward term mismatch, control deadzone, and other factors, is subtracted from measured pressure error. Finally, the modified pressure error is used as the input to the estimators and the boundary table is updated using the resultant boundary deviation estimates.

The proposed boundary automatic or self-calibration scheme implements two estimators including an integral element that are used to estimate the boundary variations of two valves at each of several channels. Each channel can represent a wheel brake in a hydraulic circuit. The sign of the pressure command derivative over time is used to determine which estimator should be updated. When the pressure command derivative over time is positive, the apply estimator would be updated and the release estimator left unchanged. When the pressure command derivative over time is negative, the apply estimator is ignored and the release estimator is updated. A modified pressure error is calculated and is then used in the estimation. The steady state pressure error resulting from mismatched feedforward term, control deadzone and other factors are then subtracted from the measured pressure error. The only error that remains after completion of the above-described correction process, is the error due to boundary deviation. The boundary deviation error is then used to update the boundary table. Gain scheduling is used in the estimators to deal with potential asymmetry in mapping from boundary deviation to modified pressure error. To avoid transients and integral wind-up the estimators are updated during gentle braking maneuvers. Finally, the whole pressure region is partitioned into segments with one state variable associated with each segment. The values of state variables are in turn used in computing control commands at the corresponding segments.

An alternate embodiment of the fast boundary auto-calibration scheme includes a quasi-closed-loop pressure control system. The system can be set up for the calibration test in such a way that the apply valves remain active when there is a rising demanded pressure. Conversely, the release valves remain active when there is a falling demanded pressure. The auto-calibration test is preferably set up so that the test only needs one cycle of pressure upward sweep and pressure downward sweep in order to cover the entire operating range of pressures for the valves. Imaginary control signals are calculated under the assumption that the targeted pressure error is present within the self-calibration test. The actual control signals used with the self-calibration test and the imaginary control signals are then used to calculate the estimated boundaries in such a way that the targeted pressure error would result with estimated boundaries in place.

Another alternate embodiment includes a method for adapting the closing boundary for a proportional poppet valve. The steps of the method include measuring a boundary value for the valve at a first pressure, implementing an estimation model, estimating boundary values for the valve at a plurality of pressures, and storing the boundary values for each of the plurality of pressures in a memory device. It is preferred that the boundary be estimated at a predetermined pressure value that is between 50 and 120 bar, and then the model be employed to estimate the remaining pressure values between 50 and 120 bar. However, it is preferred that this embodiment be implemented with one of the above-described embodiments in order to calibrate the system.

Various objects and advantages of this invention will become apparent to those skilled in the art from the following detailed description of the preferred embodiment, when read in light of the accompanying drawings.

## BRIEF DESCRIPTION OF THE DRAWINGS

Fig. 1 is a simplified schematic view of a vehicle braking system including a portion of the system electronic controls and boundary adaptation controls therefore.

Fig. 2 is a graphical comparison of a constantly increasing $P_{cmd}$ signal with an over-compensated deadband for an apply valve.

Fig. 3 is a schematic diagram of a simplified closed-loop pressure control system that processes an output brake pressure based on the demanded brake pressure in the absence of a boundary deviation.

Fig. 4A-4B is a flow diagram representing the steps of the first embodiment of the present invention.

Fig. 5 is a schematic diagram of a boundary auto-calibration system for a pressure control system according to a second embodiment of the invention.

Fig. 6 is a schematic diagram of an imaginary control law sub-function of the auto-calibration system of Fig. 5.

Fig. 7 is a flow diagram of a storage sub-function of the auto-calibration system of Fig. 5.

Fig. 8 is a flow diagram of a first embodiment of an auto-calibration system for a pressure control system according to the invention.

Fig. 9 is a flow diagram of the second embodiment of an auto-calibration system for a pressure control system according to the invention.

Fig. 10 is a flow diagram of the third embodiment of an auto-calibration system for a pressure control system according to the invention.

DETAILED DESCRIPTION OF THE PREFERRED EMBODIMENT

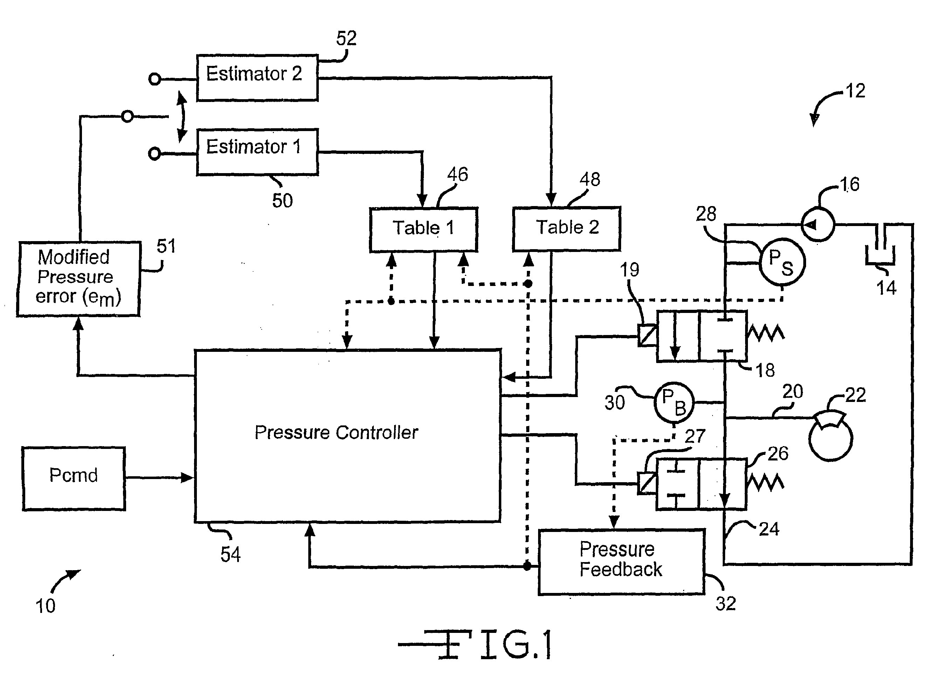

Referring now to the drawings, there is illustrated in Fig. 1 a portion 10 of the electronic circuitry processing braking signals that implements a pressure control algorithm with a greatly simplified schematic representation of a typical EHB braking system 12. The portion 10 of the electronic circuitry also includes the estimators 50, 52 of the present invention. The estimators 50, 52 can also include an integral element.

The simplified EHB system 12 includes a fluid reservoir 14. A pump 16 pumps hydraulic brake fluid from the reservoir 14. The pump 16 (typically complemented by a high-pressure accumulator, not shown) supplies pressurized hydraulic brake fluid to an apply valve 18, which is preferably implemented as a normally closed solenoid operated poppet valve. When the apply valve 18 is opened, pressurized hydraulic brake fluid passes through the apply valve 18, and flows through a conduit 20 to a vehicle wheel brake 22. A fluid conduit 24 is connected to the conduit 20 between the wheel brake 22 and the apply valve 18, and provides a return path for hydraulic brake fluid from the wheel brake 22 to the reservoir 14. A normally open solenoid 27 operated release valve 26 is disposed in the fluid conduit 24 to control the flow of hydraulic brake fluid through the fluid conduit 24.

The flow through the apply valve 18 and release (or dump) valve 26 is controlled by the pressure controller 54 based on an input signal of the pressure commanded by the user of the EHB braking system 12. A pressure command signal, $P_{cmd}$, can originate from a vehicle driver, or by a signal generated by an EHB system as described above. The signal is then processed in the pressure controller 54 to output a voltage necessary to obtain the demanded flow. Look-up table factors (voltage), represented by Voltage Boundary Table1 46 and Voltage Boundary Table2 48, are implemented in the pressure controller 54 to adjust the voltage applied across the valves (apply valve 18 or release valve 26) based on pre-existing forces on the valve. The look-up tables 46, 48 give the voltages necessary to take the valves 18, 26 from a de-energized state to a just-closed position given the existing pressure differential. The just-closed position is where the valves 18, 26 are closed and the seat force is zero. For the apply valve 18, the pressure differential is established by considering the supply pressure 28 minus the wheel brake pressure 30 ($P_s$-$P_b$). For the release valve 26, the pressure differential is the same as the wheel brake pressure 30 ($P_b$) because the pressure in the fluid reservoir is approximately zero. The de-energized state for the apply valve 18 is normally closed and the de-energized state for the release valve 26 is normally open. Voltage Boundary Table 1 46 supplies the voltage values to be used when voltage is applied to the apply valve 18 and Voltage Boundary Table2 48 supplies the values respective to the release valve 26. The voltage values for the voltage boundary tables 46, 48 account for preload forces from a spring connected to the valve armature and the pressure differential force across the valve 18, 26. The voltage values for the voltage boundary tables 46, 48 can be determined based on experimentation, the natural characteristics of a particular valve and the operating conditions. Since each valve in actual use will have different natural characteristics due to manufacturing, installation and other factors, the table voltage values will need to be updated based on those natural characteristics.

The table voltage values are updated based on system response to the pressure command signal as described below. The amount the table voltage values are updated is estimated based on the modified error between the pressure command signal and the actual pressure realized by activation of the valve. The amount of the modified pressure error, $e_m$, is determined from information within the pressure controller 54. One of the estimators 50, 52 will act to compensate for the modified pressure error. The output of the estimator 50, 52 then updates the table voltage values by increasing or decreasing the table voltage values.

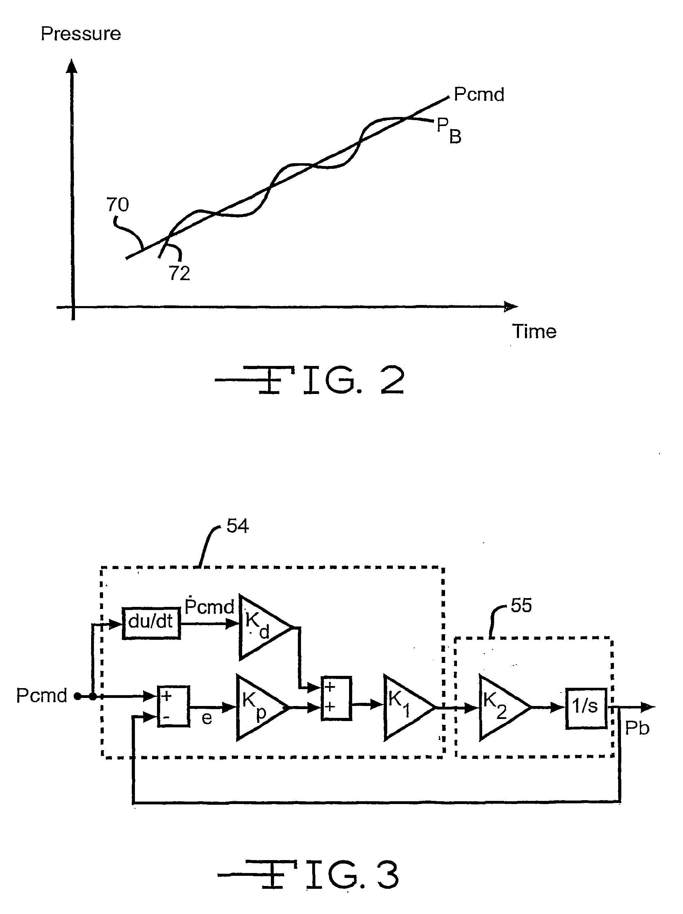

It is preferred that only one estimate should be updated at a time. There are several conditions that can be used to determine whether an estimator should be updated. The first condition is based on the polarity of the brake pressure derivative over time. That is to enable the apply estimator if the brake pressure derivative over time is greater than zero ($\dot{P}_b > 0$) and enables the release estimator if the brake pressure derivative over time is less than zero ($\dot{P}_b <$ 0). However, there are several drawbacks to using this condition to determine whether to update the estimators. First, brake pressure is generally noisy and also prone to disturbances, especially in a closed-loop system. This allows small variations due to noise to cause the estimators to update. Second, if one of the boundary curves over-compensates the deadband, oscillations in the brake pressure due to the aggressive boundary setting would provide false information on the other boundary of the wheel. This can be seen in Fig. 2. In Fig. 2, the curve 70 represents a pressure command signal with a constant rise rate. Curve 72 represents a brake pressure signal with an aggressive or over-compensated response from an apply valve 18. The oscillations above and below curve 70 demonstrate an overly aggressive apply boundary setting. Therefore, while only the apply valve 18 is supposed to be active to accommodate the rising pressure command signal, a release valve 26 would also be active when the braking pressure curve 72 overshoots the pressure command curve 70. This would cause table voltage values for both valves 18, 26 to update when only the apply valve 18 should be considered. Finally, it is hard to distinguish between transients and a steady state with an aggressive boundary curve.

A second condition under which one estimate should be updated is based on whether the corresponding valve 18, 26 is commanded to be active. This results in essentially the same result as the first condition, described above. Oscillations due to one aggressive boundary curve provide false information on the other boundary of the wheel. The curves shown in Fig. 2 again represent this condition.

In the present invention, the polarity of the pressure command derivative over time is used to determine whether to update the estimators 50, 52. That is, to enable the apply estimator 50 if the pressure command derivative over time is greater than zero ($\dot{P}_{cmd} > 0$) and enable the release estimator 52 if the pressure command derivative over time is less than zero ($\dot{P}_{cmd} < 0$), regardless of the actual state of the respective valve 18, 26. This strategy is the most effective because the apply valve 18 is supposed to be active whenever brake pressure buildup is requested ($\dot{P}_{cmd} > 0$) and the release valve 26 is supposed to be active whenever brake pressure reduction is requested ($\dot{P}_{cmd} < 0$). If the rate of change in pressure command is positive, then the apply valve is active so that there can be an increase in braking pressure. This is also demonstrated in Fig. 2. The slope of curve 70 indicates an increasing pressure command signal. The slope of the curve, $\dot{P}_{cmd}$, is therefore also positive. The opposite is also true. If the rate of change in pressure command is negative, then the release valve 26 is active so that there can be a decrease in braking pressure. Violations of this system would indicate deadband over-compensation for the valve that is supposed to be active. In the case of deadband under-compensation, the result of the system operation would be similar to that under the first condition, as described above. However, in the case of deadband over-compensation, the strategy of the present invention allows correction even while a valve 18, 26 is inactive.

For the purpose of the present invention, an integral element is included in the preferred algorithm used to estimate boundary deviation from the nominal boundary. However, pressure error between the pressure command and wheel brake pressure is not used directly in the estimators, as is the case with the invention disclosed in U.S. Patent 6,030,055 to Schubert. Instead, a modified pressure error is used such that pressure error resulting from other factors, including a mismatched feedforward term and a control deadzone, is excluded. Because integration is part of the respective estimators 50, 52, the boundary estimate will converge to a point where the modified pressure error is zero but pressure error is not zero. The difference between pressure error and modified pressure error is a function of the pressure command derivative over time, control deadzone and any other factors. The use of modified pressure error in the estimator helps achieve a consistent boundary estimate and therefore consistent pressure control performance for different types of pressure commands. Figure 3 exemplifies a method of calculating modified pressure error. The process is illustrated in a simplified closed-loop pressure control system with perfect boundary match.

In Fig. 3, $P_{cmd}$ and $P_b$ represent the pressure commanded by the brazing system 12 and the brake pressure actually realized by the braking system 12, respectively. The simplified physical system, with voltage as its input and wheel brake pressure as its output, consists of gain factor $K_2$ and integral element "1/s". The gain factor $K_2$ represents lump-sum physical gain from the voltage to the wheel brake pressure $P_b$, and the integral element "1/s" denotes the dominating dynamic relationship for the simplified system. The simplified controller, with pressure command $P_{cmd}$ and wheel brake pressure $P_b$ as inputs and voltage as output, is composed of a proportional feedback control and a derivative feedforward control. The proportional gain for the proportional feedback control, $K_p$, acts on the pressure error e between the pressure command $P_{cmd}$ and the wheel brake pressure $P_b$. The derivative gain for the derivative feedforward control, $K_d$, acts on the pressure command derivative over time. Finally gain factor $K_1$, which acts on the sum of the proportional feedback control output and the derivative feedforward control output, should be set to $K_2^{-1}$. When $P_{cmd}$ has a constant ramp rate, the steady state pressure error, $e_{ss}$, is represented by the following equation:

$$e_{ss} = \frac{(K_1 K_2)^{-1} - K_d}{K_p} \dot{P}_{cmd}$$

[I]

In the case where $K_1 K_2 = 1$, which represents that there is perfect gain match, the modified steady state error can be made equal to zero by subtracting the following steady state pressure error, $e_{ss}$, from pressure error e:

$$e_{ss} = \left( \frac{1 - K_d}{K_p} \right) \dot{P}_{cmd}$$

[II]

Therefore, the modified pressure error $e_m$ is as follows:

$$e_{\mathrm{m}} = \frac{Q_{dem} - \dot{P}_{cmd}}{K_p}$$

[III]

In equation III, $Q_{dem} = K_p e + K_d P_{cmd}$ and represents the demanded change in the amount of flow in a brake caliper. If control deadzone is defined as both valves 18, 26 being inactive when $Q_{dem} \in$ (-switch, +switch), then the modified pressure error, $e_m$, is as follows:

$$e_{\mathrm{m}} = \begin{cases} \min\left\{ \dfrac{Q_{dem} - switch}{K_p}, \dfrac{Q_{dem} - \dot{P}_{cmd}}{K_p} \right\} \\ \max\left\{ \dfrac{Q_{dem} + switch}{K_p}, \dfrac{Q_{dem} - \dot{P}_{cmd}}{K_p} \right\} \end{cases}$$

[IV]

The equation II represents the modified pressure error, $e_{ss}$ for the apply estimator. The equation III is the modified pressure error, $e_m$, for the release estimator. The first term in the min/max function, described above, is used to accommodate the control deadzone, such that integral wind-up would not result. It should be noted that the formula introduced in the example is not meant to limit the way that modified pressure error can be calculated, and the block diagram shown in Fig. 3 is not meant to restrict the scope of closed-loop pressure control strategy. The pressure error calculation depends on the control law used to calculate the error. The error calculation can implement gain factors that are functions of other variables in the system. For example, $K_p$ could be a function of feedback pressure instead of being a constant. Alternatively, the error could be calculated without using $\dot{P}_{cmd}$.

In practice, it is not practical to assume that $K_1 K_2 = 1$ over the whole pressure range of valve operations. If there is a mismatch in the gain, the mismatch can be viewed as a boundary deviation from the perspective of the estimators 50, 52. Additionally, these perceived boundary variations will be proportional to $\dot{P}_{cmd}$. To minimize the effect of these perceived boundary variations the estimators 50, 52 are updated only at low absolute values for $\dot{P}_{cmd}$, $|\dot{P}_{cmd}|$, (i.e. relatively small negative or positive values for $\dot{P}_{cmd}$ that are obtained during gentle braking maneuvers). By updating the estimators only at low $|\dot{P}_{cmd}|$ values, integration will result in much more accurate values. "Gentle braking" can be considered any braking where the absolute value of the pressure command derivative, $\dot{P}_{cmd}$, is less than the maximum allowable rate of change for wheel brake pressure, for a given valve in an EHB braking system 12. Gentle braking could also be considered gradual braking where the change in pressure command is low. For example, it could be considered gradual braking when the change in rate of pressure command, $\dot{P}_{cmd}$, is less than or equal to 100 bar/sec. At values of $|\dot{P}_{cmd}|$ that are less than a pre-specified amount, the estimators 50, 52 would be updated. A pre-specified amount could be any value that is less than the maximum pressure command derivative, $\dot{P}_{cmd}$, for a given valve. The pre-specified value could be fixed across the entire operating pressure range or can vary with pressure conditions. The pressure conditions that vary include the wheel brake pressure and the pressure differentials across a valve 18 or 26.

An additional reason for updating the estimators only at low $|\dot{P}_{cmd}|$ values is that, due to the physical dimensions of valve openings, there is a limit on the amount of fluid that can flow through an active valve, 18 or 26. As a result, if there is a large absolute value of $\dot{P}_{cmd}$, the active valve 18 or 26 may not be able to allow flow through the valve 18 or 26 at a rate that matches the demanded flow. As a result, the boundary adjustment will not be as accurate as when the updates take place during a lower flow demand event.

Unlike a spool valve where a bias on one side of the valve goes with the same amount of bias with the opposite polarity on the other side, the poppet valve has numerous combinations. It is demonstrated in Fig. 2 that both positive and negative modified pressure errors could exist with an over-compensated apply deadband, while a under-compensated apply deadband always leads to positive modified pressure error during pressure buildup. Therefore, it is possible to have a positive estimation result for an over-compensated apply deadband, but a positive estimation result would in turn aggravate the apply deadband over-compensation. As a result, there is a need for gain scheduling in the estimators 50, 52 to deal with this type of asymmetry in mapping from boundary deviation to modified pressure error.

Pressure differential related variations can be handled by using a well-given nominal boundary to reduce the amplitude and frequency of the deviations. Normally, deviations from the nominal boundary will vary over the entire pressure differential. In one embodiment, the entire boundary region is partitioned into many segments with one state variable assigned with each segment. The result of the estimation is stored in the state variable associated with the current segment. The values of state variables can be either directly used in computing control commands, or used in linear interpolation to avoid discontinuity between adjacent segments. This is also described in greater detail below.

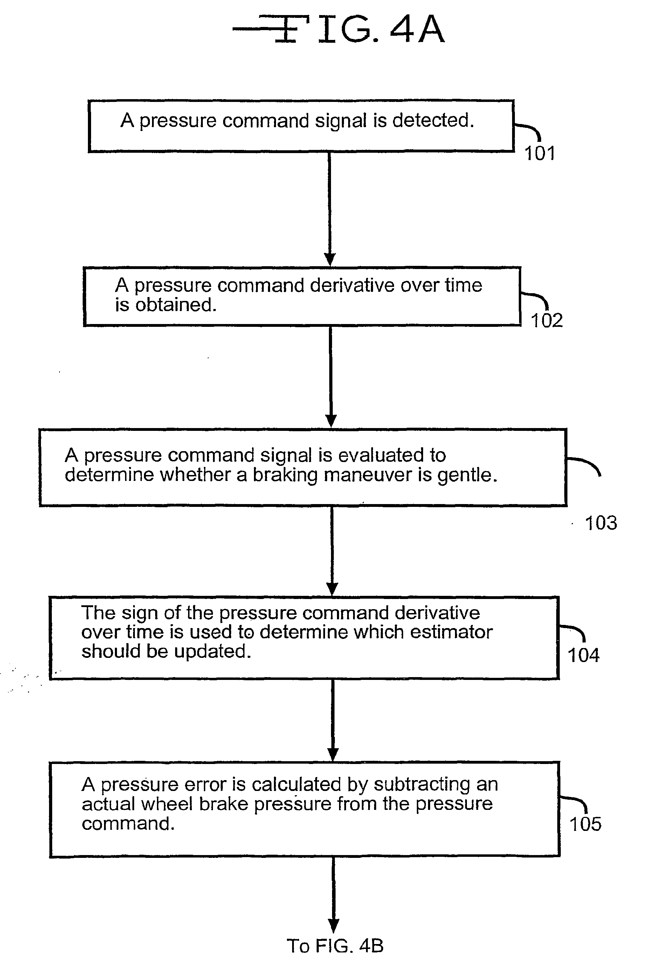

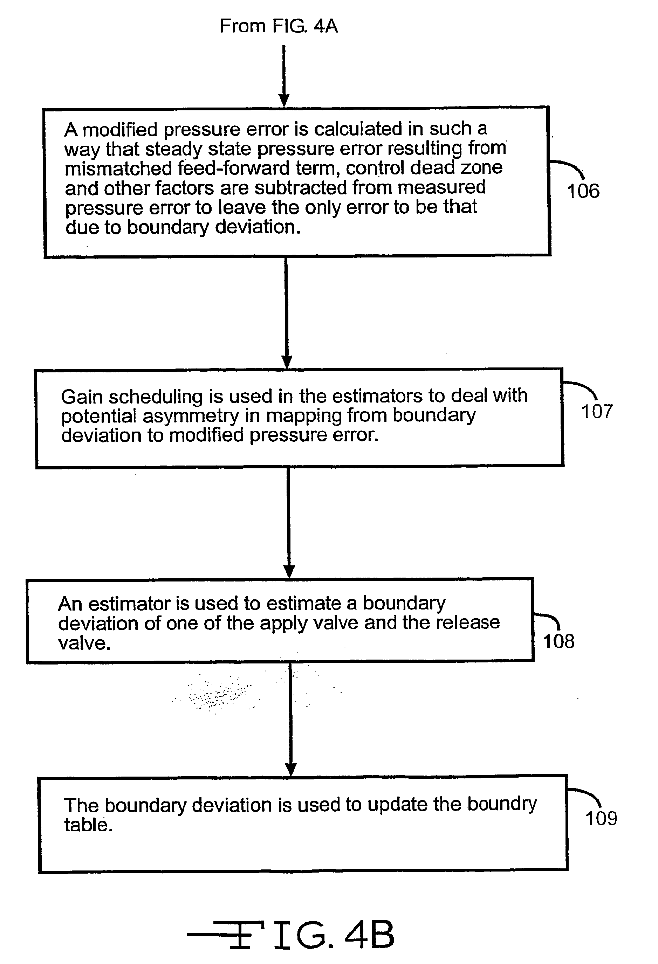

As shown in Fig. 4A and 4B, the proposed boundary auto-calibration scheme is therefore summarized as follows: (1) In a first step 101, a pressure command signal is detected; (2) in a second step 102, a pressure command derivative over time is obtained; (3) in a third step 103 a pressure command derivative over time is preferably evaluated to determine whether a braking maneuver is gentle; (4) in a fourth step 104, the sign of the pressure command derivative over time is used to determine which estimator 50 or 52 should be updated, that is, the apply estimator 50 should be updated and the release estimator 52 should not when the pressure command derivative over time is positive and vice versa; (5) in a fifth step 105, a pressure error is calculated by subtracting an actual wheel brake pressure from the pressure command; (6) in a sixth step 106, a modified pressure error is calculated in such a way that steady state pressure error resulting from mismatched feedforward term, control deadzone and other factors are subtracted from measured pressure error to leave the only error to be that due to boundary deviation; (7) in a seventh step 107, gain scheduling is used in the estimators 50, 52 to deal with potential asymmetry in mapping from boundary deviation to modified pressure error; (8) in an eighth step 108, an estimator 50 or 52 is used to estimate a boundary deviation of one of the apply valve 18 and the release valve 26; and (9) in a ninth step 109, the boundary deviation is used to update the boundary table 46 or 48. Additionally, the whole pressure region can be partitioned into segments with one state variable associated with each segment, and the values of state variables are in turn used directly or indirectly in computing control command at corresponding segments. The above listed steps have been identified as occurring in a specific order. It is understood that these steps can be accomplished in any order without departing from the scope of the present invention.

The above-described estimation scheme is preferred for use during actual braking maneuvers. However, prior to actual use, EHB systems are preferably calibrated for proper functionality. The calibration process generally is executed after the installation of an EHB system on a vehicle. One typical EHB system arrangement includes four normally closed apply valves and four normally open release valves. During calibration, a set of voltage values associated with the delta pressure across the valve is established for each valve. These values usually are called boundary values or boundaries, as described above. Therefore, eight sets of boundary values (apply and release) will be obtained from the calibration process. The normally closed apply valve is used to apply pressure to the brake when energized and the normally open release valve is used to reduce the pressure in the brake when the energized level is decreased. Thus the corresponding boundary values are also called apply boundary values and release boundary values, or apply boundary and release boundary, respectively.

During calibration, a pre-programmed ramp pressure command, such as zero to 180 bar at the rate of about 36 bar per second, is applied to the EHB system. Of course, any suitable range of pressure commands at any rate suitable for the equipment of the system may be applied. The output pressure, or response, of the system is then measured. The difference between the commanded pressure and the actual pressure realized by the activation of the valve is called the modified pressure error, $e_m$, and is described above. The pressure error, $e_m$, preferably is minimized based on a closed-loop control algorithm. When the errors associated with different pressures are reduced to a certain acceptable level, the voltage values corresponding to the pressure levels, called boundary values, are recorded to the system. The recordation can be to a flash memory device, such as a flash-ROM chip, or any other suitable memory device.

As stated above, proportional poppet valve pressure control systems are relatively sensitive to inaccuracies in a closing boundary when compared to pressure control systems for spool valves. This high sensitivity can be justified by the fact that a system using poppet valves has a far smaller effective control band at a given pressure than a system that operates with spool valves. However, the actual boundary varies from one valve to another because of manufacturing tolerances. For this reason, depending on the user's preferences and manufacturing objectives, it may be felt to be excessively time-consuming or costly to either measure the closing boundary or to manually trim the valve to match the closing boundary on the vehicle assembly line for the entire operational pressure range of the system. In summary, the first embodiment requires the application of a ∆P across each valve for the whole range of ∆P to be experienced multiple times. It can be stated that the process described in the first embodiment is an iterative process that utilizes multiple integrations in order to determine the optimal boundary value by modifying the previously recorded boundary value by a fraction of the error between commanded pressure and observed pressure. In subsequent iterations, the error ideally approaches zero as the difference between commanded pressure and observed pressure is reduced.

The second embodiment, described below, provides suitable accuracy for many applications and is faster because the pressure is ramped up and down through the entire range of ∆P only once. Thus, in a second embodiment of the present invention, to more quickly auto-calibrate a proportional poppet valve pressure control system may more suitably address any time and efficiency constraints that may be present. It can be stated that the second embodiment utilizes a non-iterative process in that when the boundary value is calculated, based on a single determination of the error between the commanded pressure and observed pressure, the entire error is used as the boundary value.

A limitation of the calibration process, as described in detail above, is that it is generally a time consuming process relative to vehicle assembly line processes. Since the calibration is generally conducted at the vehicle assembly line, the calibration process may create a bottleneck due to the relatively time consuming calibration procedure. To increase the throughput of the assembly line, multiple calibration stations may be required to create parallel flow paths. An additional number of stations would occupy a larger area on the manufacturing facility floor, and therefore, would take up valuable space. Therefore, it would be advantageous to reduce the calibration time so that assembly line speed would not be compromised and so additional stations would not be necessary.

The above-described embodiment provides good results for calibrating the closing boundary for a proportional poppet valve. Particularly, that embodiment is preferable for adapting the closing boundary during ordinary use of the vehicle. That is, the adaptation scheme described above can be used as a per use calibration scheme. This is further preferable due to the amount of time that the described calculations require to be conducted. During normal driving, the relatively long calibration period (e.g. several minutes) that it takes to detect a pressure signal, obtain a pressure command derivative, determining which closing boundary to update, calculating a pressure error and implementing the error to obtain the correct estimation is not a concern to the driver of the vehicle. Additionally, the calibration can be conducted each time the vehicle brakes are used to obtain accurate closing boundaries. This calibration can also be used to update the values determined as the valves and other brake system components wear. Contrarily, in a manufacturing setting, it would be advantageous to implement a boundary self-calibration scheme to allow the system to self-calibrate more quickly and accurately. Therefore, the embodiment described below is preferably active during the manufacturing process, and disabled during normal vehicle use. During normal vehicle use, it is preferred that the above-described embodiment be employed. However, any suitable combination of the systems can be used.

The second embodiment implementing a fast boundary auto-calibration scheme includes a quasi-closed-loop pressure control system. The system can be set up for the calibration test in such a way that the apply valves remain active when there is a rising demanded pressure. Conversely, the release valves can remain active when there is a falling demanded pressure. The auto-calibration test of this embodiment is preferably set up so that the test only needs one cycle of pressure upward sweep and pressure downward sweep in order to cover the entire operating range of pressures for the valves. Imaginary control signals are calculated under the assumption that the targeted pressure error is present within the self-calibration test. The actual control signals used with the self-calibration test and the imaginary control signals are then used to calculate the estimated boundaries in such a way that the targeted pressure error would result with estimated boundaries in place.

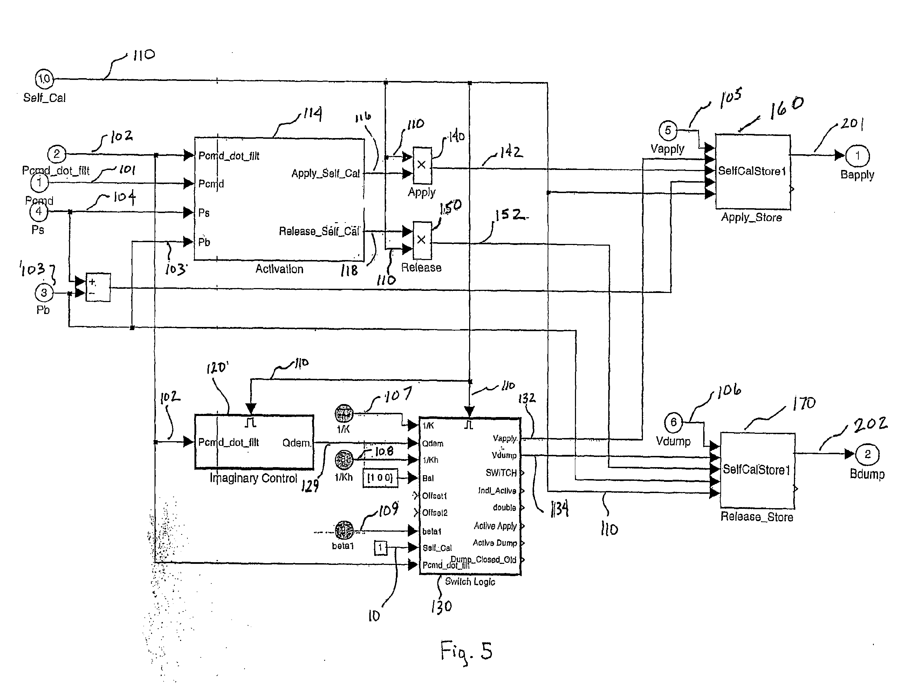

Illustrated in Fig. 5 is a detailed schematic of the boundary auto-calibration scheme. The inputs to the boundary self-calibration scheme are filtered pressure demand derivative, $P_{cmd-dot-filt}$ 102; demanded pressure, $P_{cmd}$ 101; estimated wheel pressure, $P_b$ 103; measured supply pressure, $P_s$ 104; gain factors $1/K$ 107 and $1/K_h$ 108, *beta*1 109, an auto-calibration flag, *Self-Cal* 110, and outputs from a switch logic function of the EHB system, $V_{apply}$ and $V_{dump}$. The outputs of the function are closing boundary adjustment values, $B_{apply}$ for the apply valve and $B_{dump}$ for the release valve. The various sub-functions illustrated in Fig. 5 are explained in greater detail below.

In order for this quasi-closed-loop pressure control system to be set up for the auto-calibration in such a way that the apply valves would always be active with rising demanded pressure and the release valves always being active with a falling demanded pressure, an offset value of the demanded flow, $Q_{dem}$ is used in the test system. The offset is established to guarantee that there is at least a specified amount of difference in pressure error between when the modified pressure error is zero and when the $Q_{dem}$ is equal to zero. By setting the offset to infinity, the modified error, $e_m$, will never reach the offset and therefore the valve will always remain active with a rising or falling demanded pressure, such as with the apply valve or release valve, respectively.

The self-calibration test is preferably set up so that the test only needs one cycle of pressure sweep to cover the entire operating range of pressures for the valves. To do this, the one cycle of pressure command, $P_{cmd}$, should take the form of one pressure increase ramp and one pressure decrease ramp with the pressure decrease ramp having different rates of pressure decrease at different regions of the pressure range. The boundary auto calibration function contains sub-functions that are adapted to assist in the operation of the complete closed-loop system. The sub-functions are activation, imaginary control, switch logic, and storage (for both apply and release). The activation sub-function provides conditions applicable to both the apply and release valves and determines whether to enable the ensuing boundary update routines. At least one condition provided by the activation sub-function is the determination of hydraulic saturation conditions. Hydraulic saturation conditions are the maximum apply or release rates for the valve as configured in the system. The maximum hydraulic capability reflected by the orifice size is a non-linear function of pressure differential across the valve and brake pressure. The maximum hydraulic capability is the best rate the pressure can be applied and can vary with the brake line length, brake load, the maximum accumulator pressure, as well as other physical characteristics of the brake system. If there is a particular error entering the system, then after several iterations the error will sum to infinity. Therefore, to prevent integrator wind-up from occurring, the operating program can limit the maximum error that can be reached. For example, to prevent integrator wind-up, the following hydraulic saturation conditions could be satisfied prior to any further calculations on the boundary value updates being conducted:

$$P_{\text{cmd-filt}} \leq P_s\text{-}5 \text{ bar} \qquad\qquad\qquad [V]$$

$$\begin{cases} P_{cmd-filt} \geq \begin{cases} 2.5bar \\ 10bar \end{cases} \qquad \text{If } P_{\text{cmd}} > 0 \text{ for at } 0.25 \text{ seconds, otherwise} \\ P_b \geq 5 \end{cases}$$

$$\text{when } P_{\text{cmd-dot-filt}} < 0$$

and

$$P_{\text{cmd-dot-filt}} > \text{Maximum Dump Rate which is a function of } P_{\text{cmd-filt}}$$

$$\text{when } P_{\text{cmd-filt}} \leq 10 \text{ bar} \qquad [VI]$$

$P_{\text{cmd-filt}}$ is the commanded pressure after the command signal is processed through a first order low pass filter essentially to reduce the noise in the brake system. $P_{\text{cmd-dot-filt}}$ is the rate of change of $P_{\text{cmd-filt}}$, which is then filtered again through another first order low pass filter to further reduce noise. The result of the above condition equations are used to determine whether a True or False condition is satisfied. The polarity of $P_{\text{cmd-filt}}$ determines whether the conditions are met. If the polarity is positive, then the Apply valve signal, *Apply-Self-Cal* is activated and the signal moves on line 116 of Fig. 5. If the polarity is negative, then *Release-Self-Cal* is activated and the signal moves on line 118. If there is no polarity, or the value is zero, then neither is activated because neither valve needs to be updated.

The imaginary control sub-function is based on a "target error", which is the desired pressure error for the auto calibration function to achieve. The "target error" can be determined using the following equation:

$$\text{Target Error} = \left(\frac{1-K_d}{K_p} + Delay\right) P_{cmd-dot-filt} \qquad\qquad [VII]$$

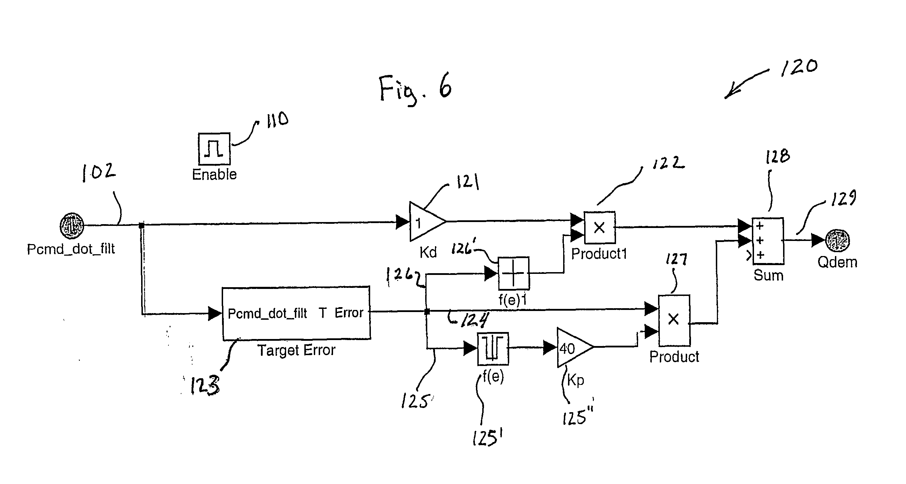

where $K_d$ and $K_p$ are the same gain factors described above in equations I-IV. Delay is a time delay between the command pressure signal and the detection of a response to that signal. If the signal is processed quickly, then the calibration process is not implemented. If the signal takes a long time to process, then the calibration continues as shown in Fig. 6 at lines 124, 125 and 126.

Illustrated in Fig. 6 is a schematic diagram for the imaginary control sub-function 120. The imaginary control sub-function 120 is used to provide an imaginary demanded flow, $Q_{\text{dem}}$, to the calibration scheme. The imaginary control function is in essence a function that defines an idealized demanded flow, $Q_{\text{dem}}$, for the calibration scheme. If it is determined that the imaginary control sub-function 120 is to be enabled, then the imaginary control sub-function activates as a part of the self-calibration scheme through an input on the line 110. The input into the imaginary control sub-function 120 on the line 110 is the pressure command derivative, $P_{\text{cmd-dot-filt}}$. The target error, calculated in equation VII, is combined with the $P_{\text{cmd-dot-filt}}$ in block 123 to resolve them into factors and split into two tracks. Factors are any of the numbers or symbols in mathematics that when multiplied together form a product quantity by which a given quantity is multiplied or divided in order to indicate a difference in measurement (costs increased by a ~ of 10). A first track takes $P_{\text{cmd-dot-filt}}$ and modifies it by gain factor $K_d$ in a step 121. The output of this track goes to a factor box 122. On a second track, $P_{cmd-dol-filt}$ is factored with the Target Error in a step 123. The output of the Target Error factor at step 123 feeds into three Target Error tracks 124, 125, and 126. The Target Error output track 124 feeds straight into a multiplication box 127. The second Target Error track 125 takes the output of the Target Error step 123 and processes it through a function box 125', which modifies the signal passing therethrough as a function. The output of the function box 125' is modified by gain factor $K_p$ as indicated at 125". After modification by the gain factor $K_p$, the signal is finally multiplied with the signal of the first Target Error track 124 in the factor box 127. The function box 125' processes the Target Error through a function that acts as a gain schedule. The function preferably allows a non-linear gain based on the input value to adjust the Target Error. However, it should be understood that a linear gain could also be used. The third Target Error track 126 flows from the Target Error factor 123 through a function box 126' and into the factor box 122. The function box 126' also processes the Target Error through a function. The function 126' has the same effect as the function 125' and serves the same general purpose, however it can be based on different values. The signal of the first track out of step 121 and the signal of the third Target Error track out of the function box 126' are factored together in factor box 122 and flow to a final adder box 128. In the final adder box 128, the output of the second and third Target Error tracks multiplication in the multiplication box 127 are added to the output of the factor box 122. The sum is output on the line 129 and is the demanded flow, $Q_{dem}$, for the given $P_{cmd\text{-}dot\text{-}filt\text{-}}$ Referring again to Fig. 5, for the switch logic sub-function 130 it is preferred that the input demanded flow, $Q_{dem}$, comes from the imaginary control function 120.

Deviations from the nominal boundary can occur anywhere over the pressure differential range experienced by the valve under control. A well given nominal boundary and a robust hardware design will reduce the amplitude and frequency of the deviations. In a preferred embodiment, in which the valve will experience differential pressures in the range of 0-180 bar, the pressure region is divided into 17 segments (10 bar each between 5 bar and 175 bar) with one state variable, *Self-Cal-Data[]*, associated with each segment (i.e., *Self-Cal-Data*[1], *Self-Cal-Data*[2], etc.). The difference between actual voltage command and imaginary voltage command is calculated, and then the averaged difference over a segment is stored in the state variable, *Self-Cal-Data*[]. The averaged difference can be determined anytime a difference is detected. The difference between actual command voltage and the imaginary voltage command (for a given 10 bar pressure region) is added to any previously obtained voltage difference (for that same region). The sum is then divided by the number total number of cycles where there has been a difference. This results in an averaged difference over a segment. The values of the state variables are not directly used in computing control command. However, linear interpolation at the mid-point of a segment should be equal to *Self-Cal-Data*[].

It should be noted that while the preferred embodiment is described as having 17 segments of 10 bar differential pressure each, any suitable number of segments of any suitable pressure ranges may be used depending on the particular design objectives. It is contemplated that in some embodiments some segments may be a different span than others if experience with a certain valve justifies this. For example, if a particular valve design has a greater frequency of deviations from a nominal boundary when $\Delta$Ps are high, the segments in this range may be more numerous and cover a smaller pressure range than the segments at low $\Delta$Ps where the frequency of deviations is not as great.

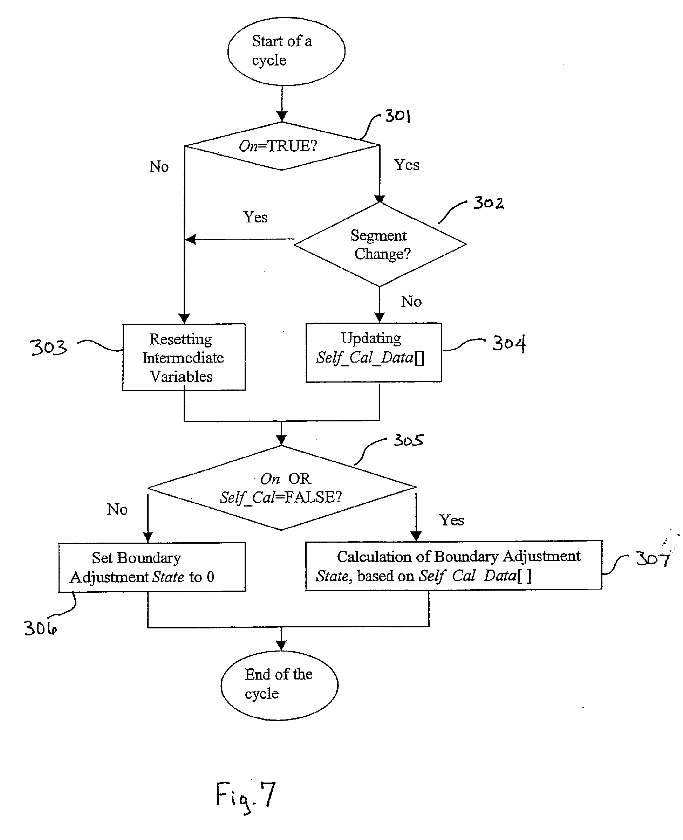

Illustrated in Fig. 7 is the flow diagram of the storage sub-function, as is also illustrated in Fig. 5 at 160 and 170 for the apply and release valves, respectively. It should be understood that the flow diagram applies to either the apply valve or release valve depending on which valve is being calibrated. The sub-function essentially determines whether to store the calculated boundary value. For the purpose of simplicity of explanation, Fig. 7 is being described as it applies to the apply valve, however, the same process can be applied to the release valve. At the start of a cycle, in step 301, it is determined whether the *Apply_Self_Cal* is activated. If so, the signal flow is as shown in Fig. 5 at line 142. The next step 302 is used to determine whether the EHB system is operating in a different segment of the 17 pressure segments than the segment that was previously stored during a previous calculation cycle. If so, then the intermediate variables are reset in a step 303. This is also what occurs if the system is not "on" in the initial determination in a step 301. If there is no segment change, the *Self-Cal-Data[]* is updated in step 304 based on the input values to the activation sub-function. From this point, whether the signal comes from step 303 or 304, the process determines again in step 305 that which was checked in step 301, whether the *Apply_Self_Cal* is activated or the *Self_Cal* from line 110, is not activated. That is, the storage sub-function determines whether the information dictates that the previously stored values need to be updated. If not, then the adjustment is set to zero in a step 306. If an update is required, the boundary adjustment is determined based on the *Self-Cal-Data[]* value in a step 307, as is seen in block 160 in Fig. 5. However, for the release valve, the *Release_Self_Cal* is on line 152, and the update of the boundary value is in block 170.

The calculation of the boundary adjustment state in the step 307, which is the interpolation of *SelfCal-Data*[], is done as follows:

If $\Delta$P (Pressure Differential across the valve) < 10 bar,
then

$$\text{State} = \textit{Self-Cal-Data}[0]$$

otherwise,
if $\Delta P \geq 170$ bar,
then

$$\text{State} = \textit{Self-Cal-Data}[16].$$

However, if the P is in the range from less than 170 bar down to and including 10 bar, then

$$\text{State} = \textit{Self-Cal-Data}[i-1]+(\textit{Self-Cal-Data}[i]-\textit{Self-Cal-Data}[i-1])*(\Delta P/10-i)$$

where $i \leq \Delta P/10 < i+1$

Once the state is determined, the self-calibration system has the information required to determine whether to update the stored boundary values.

The above-described self-calibration cycle has four operating phases. In the initial operating phase, the EHB system is initially inactive. However, it should be understood that the system could be at any operating point during this initial operating phase. The waiting phase occurs immediately after setting the Self-Calibration code. In the second phase, the waiting phase, the pressure command, $P_{cmd}$, is set to about 5 bar to try and fill the brake calipers 22. Additionally, the pressure in the accumulator (not shown) is controlled to be between about 180 bar and about 185 bar. In the third phase, the auto-calibration phase, the accumulator pressure is preferably held above 180 bar and the pressure command is set at 5 bar for a per-determined short period of time. After that interval, the pressure command, $P_{cmd}$, starts to ramp up at about 40 bar per second from 5 bar. During this operation, it is preferred that the currents for the release valve are kept at the highest levels (as explained above with the offset to guarantee a specified amount of difference in pressure error). Two pump motor control parameters (typically, on and off) are set so that the pump maintains pressure from about 180 (on) to 185 (off) bar, and from about 140 (on) to 145 (off) bar, respectively. After a second pre-determined amount of time of ramping up, the pump motor can activate to allow the accumulator pressure to "coast" down when the pressure command rises. Once the pressure command, $P_{cmd}$, meets the accumulator pressure at a pressure level between 140 bar to 180 bar (generally around 160 bar), the pressure command, $P_{cmd}$, starts to ramp down at about 40 bar per second. At 40 bar, the rate of the downward ramp preferably drops to 20 bar per second. During the ramp down, currents for the apply valves are set to zero. In the fourth phase of operation, the normal operating phase, the auto-calibration process is completed. At this point, the pressure command preferably has ramped down to about 5 bar. Then, the auto-calibrated EHB system would return to normal operation. Normal operation encompasses maintaining the accumulator pressure between about 140 bar and 180 bar. As the $P_{cmd}$ is changing during the ramp up and ramp down cycle, the above-described calibration mechanisms are effected to determine the boundary values at the varying $P_{cmd}$ values. This establishes the boundary table values for use with the apply and release valves, as was described above. It should be understood that as a preferred embodiment, the fast self-calibration scheme described above is used during installation at a manufacturing facility. Therefore, the self-calibration cycle with the four phases is really an initial calibration process and the normal operation phase does not generally include typical operation of the EHB system, such as with daily use. However, if the above-described embodiment is used as a daily-use calibration system, then the four phase calibration can be done at start-up with the normal operation phase continuing during the operation of the vehicle.

This self-calibration model can be used on a per use basis with the boundary values being stored in a temporary or a non-erasable memory device (one-time use) during operation of the vehicle. For example, at vehicle startup the calibration process model can be activated and the boundary values being determined based on initial values that are pre-programmed in the system. The values can then be updated during operation of the vehicle.

In a third embodiment of the invention, the time required for auto-calibration of the EHB pressure control system is shorter than the time required for either the first or second embodiments described above. As will be described in detail below, this will be accomplished by limiting the ranges of ∆Ps to be applied across the system apply and release valves. That is, instead of cycling through the entire range of ∆Ps across the apply valves and release valves several times (at various different brake pressures) as in the first embodiment, or cycling through the entire range of ΔPs across the apply and dump valves once as in the second embodiment, and testing and updating the boundary table values based on these entire range of values, it has been determined that in some applications it may be adequate to only test once at a few specific values of ΔP across the valves. More specifically, in calibrating an EHB system for a four-wheel vehicle, the initial boundary values for the apply valve and release valve for each of the four brakes (left front, right front, left rear and right rear) are determined by testing or experimentation on prototype vehicles. The rate of change for boundary values at given pressure levels could be determined at a given interval of ΔP indicating a rate of change, $V_r$, of the boundary values. It has been found that $V_r$ is relatively small between about 50 bar and about 120 bar, compared to the rate of change of boundary values, $V_r$ between 0 bar to about 50 bar, and compared to the rate of change of boundary values, $V_r$ between about 120 bar to about 170 bar. Due to the relatively small rate of change in boundary values, $V_r$, in the range of about 50 bar to 120 bar, at increments of 20 bar, the apply boundary model and release boundary models can be obtained through regression analysis on the sixty sets of boundaries between 50 bar and 120 bar. This analysis shows that there is a relatively small rate of change, $V_r$ between 50 bar and 120 bar. Therefore, the boundary values among different brakes closely parallel each other between 50 bar and 120 bar. This parallelism applies regardless of whether apply boundary values or release boundary values are being determined. Further, this parallelism shows that calibration can be conducted using only one set of measured values between about 50 bar and 120 bar.

Therefore, an apply boundary model and release boundary model can be implemented to estimate the boundary values between about 50 bar and 120 bar. For the estimated boundary values, an estimation model can be simplified using the following equations:

$$A_b = A + A_{b1}*\beta - A_{b2}*\beta^2 + A_{b3}*\beta^3 \qquad [VIII]$$

and

$$D_b = B + D_{b1}*\beta - D_{b2}*\beta^2 + D_{b3}*\beta^3 \qquad [IX]$$

Where $A_b$ and $D_b$ are the modeled apply boundary and release boundary values, respectively. $A_b$ can be the upper limit of the low valve range, and $D_b$ can be the lower limit of the upper valve range. A and B are constants determined by testing the installed system. The pressure value, $\beta$, at which the boundary value is to be estimated is measured in bar of pressure. Preferably, the pressure value, $\beta$, is estimated between 50 and 170 bar. $A_{b1}$, $A_{b2}$ and $A_{b3}$ are constants that can be estimated or determined based on values obtained by testing the system and the estimation model being used. $D_{b1}$, $D_{b2}$ and $D_{b3}$ are preferably similarly determined. It should be understood that the estimated values could be determined by the equation described above, or any suitable statistical interpolation or extrapolation method. For example, $A_b$ could be written as a function of the pressure value, $\beta$.

$$A_b = F_{apply}(\beta)$$

Similarly, for $D_b$, the function could be written as:

$$D_b = F_{release}(\beta)$$

where in either function, the function could be linear, exponential or otherwise, as best suited for the EHB system. Additionally, the estimation can be based on initial pressure values outside the data range of about 50 to 120 bar, and in fact, the estimation can be based on values throughout the pressure range including 0 bar to at least 185 bar.

To apply the estimation model, an initial set of apply or release boundary values are collected from the EHB system. This can be done, for example, by actually testing the system at an initial pressure level. Alternatively, either of the above-described embodiments can be used in conjunction with this embodiment to obtain pressure values. Once the $A_b$ or $D_b$ value is known from actual tests or implementation of one of the other methods of estimation described above (for example, by determining the pressure error, $e_m$, and calculating an initial boundary value by using the equations I-IV) (or indeed, determined by any suitable method of estimation of the valves for $A_b$ or $D_b$) then equations VIII and IX can be used to determine the remaining boundary values at other pressure levels. In one typical EHB system it was found that for a four wheel passenger vehicle the pressure levels could be estimated between about 50 bar and 120 bar, but the method is not limited to that pressure range. Additionally, the method of this embodiment can be used with any method of determining boundary values at upper and lower bounds to interpolate or extrapolate the intermediate values. Alternatively, if an upper or lower boundary value have been determined by any suitable method, the method of this embodiment can be used to determine boundary values above or below the upper or lower boundary value.

Typically, a ramp command is used in the calibration process with the ramp being about 36 bar per second from 0 bar to about 180 bar. Of course, any suitable ramp rate through any suitable pressure range could be used in the calibration process. Since the boundary values between about 50 bar and 120 bar are to be estimated based on measured values, the ramp command for the calibration using the above-described embodiment can be 36 bar per second from 0 bar to about 50 bar and from about 120 bar to about 180 bar. This results in a substantial reduction in the amount of time the calibration process takes since the pressure range of about 50 bar to 120 bar is eliminated from being directly measured. As a result, the calibration process is faster and can therefore be used in the vehicle manufacture process without creating a production line bottleneck. It should be understood that the model described herein can also be used in other situations, such as during vehicle startup or as the brakes are used during vehicle operations.

The embodiments described above have been depicted as using voltage controls. Since voltage is proportional to current, it is understood that the use of current controls is also within the scope of the claims of the present invention.

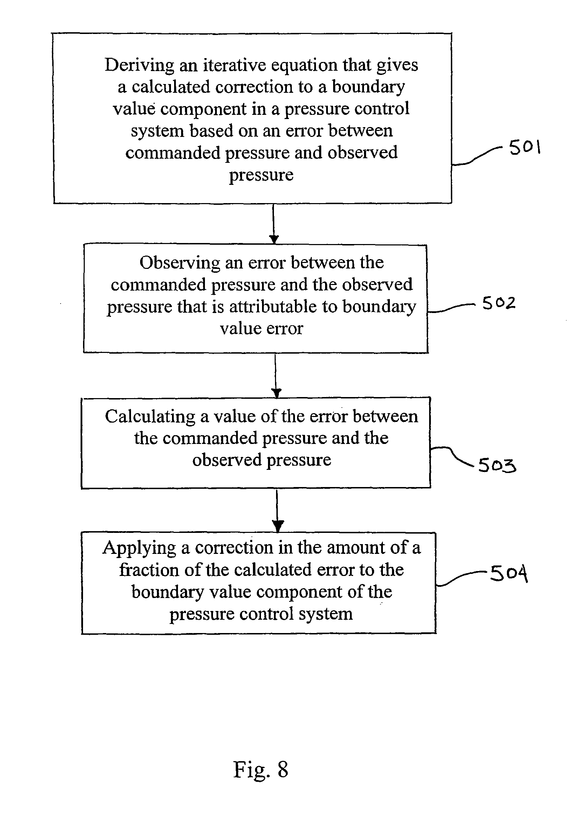

As shown in Fig. 8, the first embodiment of the invention can be summarized as follows: (1) In a first step 501, deriving an iterative equation that gives a calculated correction to a boundary value component in a pressure control system based on an error between commanded pressure and observed pressure; (2) in a second step 502, observing an error between the commanded pressure and the observed pressure that is attributable to boundary value error; (3) in a third step 503, calculating a value of the error between the commanded pressure and the observed pressure; and (4) in a fourth step 504, applying a correction in the amount of a fraction of the calculated error to the boundary value component of the pressure control system.

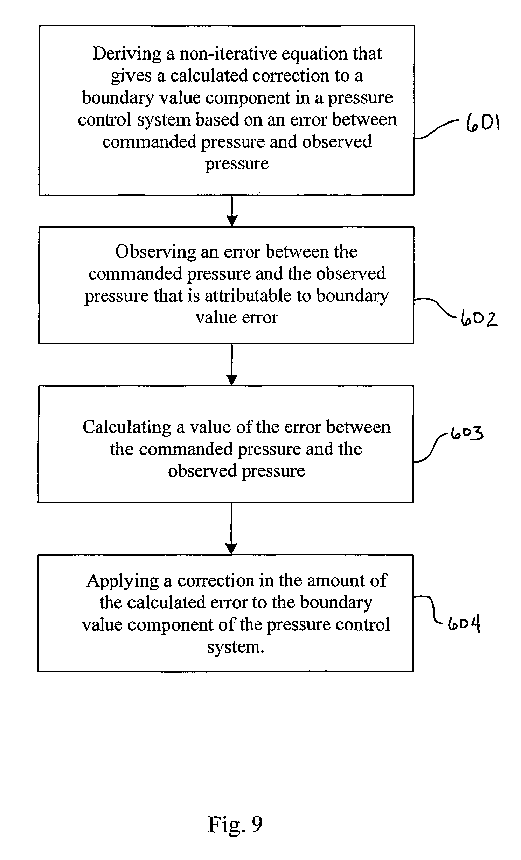

As shown in Fig. 9, the second embodiment of the invention can be summarized as follows: (1) In a first step 601, deriving a non-iterative equation that gives a calculated correction to a boundary value component in a pressure control system based on an error between commanded pressure and observed pressure; (2) in a second step 602, observing an error between the commanded pressure and the observed pressure that is attributable to boundary value error; (3) in a third step 603, calculating a value of the error between the commanded pressure and the observed pressure; and (4) in a fourth step 604, applying a correction in the amount of the calculated error to the boundary value component of the pressure control system.

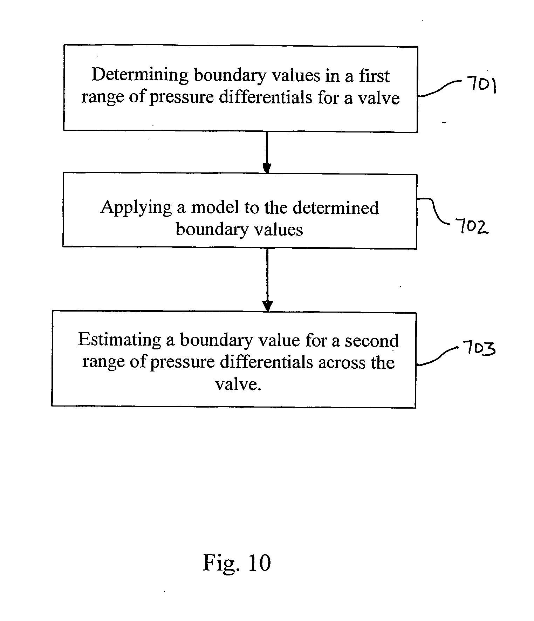

As shown in Fig. 10, the third embodiment of the invention can be summarized as follows: (1) In a first step 701, determining boundary values in a first range of pressure differentials for a valve; (2) in a second step 702, applying a model to the determined boundary values; and (3) in a third step 703, estimating a boundary value for a second range of pressure differentials across the valve.

The principle and mode of operation of this invention have been explained and illustrated in its preferred embodiment. However, it must be understood that this invention may be practiced otherwise than as specifically explained and illustrated without departing from its scope. For instance, it can be applied with minor or no modifications to estimate the characteristic curves described in U.S. Patent 6,086,167 to Heckmann, et al.

**Claims**

1. A method for adapting a closing boundary for a first valve (18) operating to control a pressure applied to a channel in a hydraulic circuit comprising:

   detecting a pressure command signal ($P_{cmd}$);
   detecting a response of the first valve (18) to the pressure command signal ($P_{cmd}$);
   obtaining a pressure error from an actual pressure ($P_b$) and the pressure command signal ($P_{cmd}$) ;
   calculating a modified pressure error ($e_m$) based on the pressure error, and
   upon a steady state pressure error resulting from feedforward term mismatch and control deadzone;
   implementing an estimator (50,52) to estimate a closing boundary deviation of the first valve (18) based on the modified pressure error ($e_m$); and
   updating the closing boundary using the resultant closing boundary deviation estimate.

2. The method defined in Claim 1 further comprising adapting a closing boundary for a second valve (26) cooperating with the first valve (18) to control the pressure ($P_b$) applied to a channel in a hydraulic circuit including:

obtaining a pressure command derivative over time ($dP_{cmd}/dt$);
using the sign of the pressure command derivative over time ($dP_{cmd}/dt$) to determine whether to update the closing boundary of one of the first valve (18) and second valve (26);
obtaining the pressure error by subtracting the actual pressure ($P_b$) from the pressure command ($P_{cmd}$) ;
implementing the estimator (50, 52) to estimate the closing boundary deviation of the one of the first valve (18) and second valve (26) based on the modified pressure error ($e_m$); and updating the closing boundary of the one of the first valve (18) and second valve (26) using the resultant closing boundary deviation estimate.

3. The method according to claim 1 or 2 wherein the channel is a wheel brake (22) of a motor vehicle, and the actual pressure is an actual brake fluid pressure at the wheel brake (22).

4. The method according to one of claims 1 to 3 wherein the modified pressure error ($e_m$) for the first valve (18) has alternating signs that result from an over-compensated deadband and wherein the modified pressure errors ($e_m$) with alternating signs give a negative boundary deviation estimate.

5. The method according to one of claims 2 to 3 wherein the modified pressure error ($e_m$) for the second valve (26) has alternating signs that result from an over-compensated deadband and wherein the modified pressure errors ($e_m$) with alternating signs give a positive boundary deviation estimate.

6. The method according to claim 3 wherein the estimator (50, 52) is updated only during gentle braking maneuvers, the gentle braking being braking where the absolute value of the pressure command derivative over time ($dP_{cmd}/dt$) is less than a pre-specified value that further is less than the maximum allowable rate of change for wheel brake (22) pressure for the valve (18, 26).

7. The method according to claim 6 wherein the pre-specified value is at least one of a value that is fixed across the entire operating pressure range for a braking system (12) and a value that varies with pressure conditions.

8. The method according to claim 7 wherein the pressure conditions comprise wheel brake (22) pressure and pressure differential across the valve (18, 26).

9. The method according to one of claims 1 to 8 wherein a first (50) and a second (52) estimator are used to estimate boundary deviations of the first (18) and second (26) valve at each channel.

10. The method according to one of claims 2 to 9 wherein the sign of the pressure command derivative over time ($dP_{cmd}/dt$) is used to determine whether a first (50) or second estimator (52) is updated.

11. The method according to one of claims 1 to 10 comprising the steps of:

determining boundary values in a first range of pressure differentials for the valve (18, 26);
applying a model to the determined boundary values; and
estimating a boundary value for a second range of pressure differentials across the valve (18, 26).

12. The method according to claim 11 wherein
one of the first range of pressure differentials and second range of pressure differentials is from about 0 bar to about 50 bar; and
the other one of the first range of pressure differentials and second range of pressure differentials is from about 50 bar to about 120 bar.

13. The method according to claims 11 or 12 wherein an estimation model used in estimating the boundary value is based on at least one of a linear function and an exponential function.

14. The method according to one of claims 1 to 13, wherein, when updating the closing boundary using the resultant closing boundary deviation estimate, the applied correction is equal to the closing boundary deviation estimate.

15. The method according to one of claims 1 to 13, wherein, when updating the closing boundary using the resultant closing boundary deviation estimate, the applied correction is equal to a fraction of the closing boundary deviation estimate.

**16.** The method according to claim 14, wherein the boundary deviation estimate is calculated based on a single determination of the error between the commanded pressure and the observed pressure.

**17.** The method according to claim 14 or 15, wherein the boundary value correction method is implemented each time the pressure control system is operated.

**18.** The method according to claim 14 or 15, wherein the boundary value errors for the range of pressures are determined by at least one of a pressure upward sweep and a pressure downward sweep through the range of pressures.

**Patentansprüche**

**1.** Verfahren zum Anpassen einer Schließgrenze für ein erstes Ventil (18), das dazu betrieben wird, einen Druck, der auf einen Kanal in einem Hydraulikkreis aufgegeben wird, zu steuern, aufweisend:

Erfassen eines Druckbefehlssignals ($P_{cmd}$);
Erfassen einer Antwort des ersten Ventils (18) auf das Druckbefehlssignal ($P_{cmd}$);
Erlangen eines Druckfehlers aus einem tatsächlichen Druck ($P_b$) und dem Druckbefehlssignal ($P_{cmd}$);
Berechnen eines modifizierten Druckfehlers ($e_m$) beruhend auf dem Druckfehler, und
auf einen Gleichgewichtszustands-Druckfehler hin, der sich aus einer Vorwärtskopplungsgrößen-Fehlanpassung und einer Steuertotzone ergibt;
Implementieren einer Abschätzungseinrichtung (50, 52), um eine Schließgrenzenabweichung des ersten Ventils (18) beruhend auf dem modifizierten Druckfehler ($e_m$) abzuschätzen; und
Aktualisieren der Schließgrenze unter Verwendung der sich ergebenden Abschätzung der Schließgrenzenabweichung.

**2.** Verfahren nach Anspruch 1, ferner aufweisend Anpassen einer Schließgrenze für ein zweites Ventil (26), das mit dem ersten Ventil (18) zusammenarbeitet, um den Druck ($P_b$), der auf einen Kanal in einem Hydraulikkreis aufgegeben wird, zu steuern, umfassend:

Erlangen eines Druckbefehl-Differentialquotienten über die Zeit ($dP_{cmd}/dt$);
Verwenden des Vorzeichens des Druckbefehl-Differentialquotienten über die Zeit ($dP_{cmd}/dt$), um zu bestimmen, ob die Schließgrenze des ersten Ventils (18) oder des zweiten Ventils (26) aktualisiert werden soll;
Erlangen des Druckfehlers mittels Subtrahierens des tatsächlichen Drucks ($P_b$) von dem Druckbefehl ($P_{cmd}$);
Implementieren der Abschätzungseinrichtung (50, 52), um die Schließgrenzenabweichung des ersten Ventils (18) oder des zweiten Ventils (26) beruhend auf dem modifizierten Druckfehler ($e_m$) abzuschätzen; und
Aktualisieren der Schließgrenze des ersten Ventils (18) oder des zweiten Ventils (26) unter Verwendung der sich ergebenden Abschätzung der Schließgrenzenabweichung.

**3.** Verfahren nach Anspruch 1 oder 2, bei dem der Kanal eine Radbremse (22) eines Kraftfahrzeugs ist und der tatsächliche Druck ein tatsächlicher Bremsflüssigkeitsdruck an der Radbremse (22) ist.

**4.** Verfahren nach einem der Ansprüche 1 bis 3, bei dem der modifizierte Druckfehler (em) für das erste Ventil (18) wechselnde Vorzeichen aufweist, die sich aus einer überkompensierten Totzone ergeben, und bei dem die modifizierten Druckfehler ($e_m$) mit wechselnden Vorzeichen eine negative Abschätzung der Grenzenabweichung ergeben.

**5.** Verfahren nach einem der Ansprüche 2 bis 3, bei dem der modifizierte Druckfehler ($e_m$) für das zweite Ventil (26) wechselnde Vorzeichen aufweist, die sich aus einer überkompensierten Totzone ergeben, und bei dem die modifizierten Druckfehler ($e_m$) mit wechselnden Vorzeichen eine positive Abschätzung der Grenzenabweichung ergeben.

**6.** Verfahren nach Anspruch 3, bei dem die Abschätzungseinrichtung (50, 52) nur während sanften Bremsmanövern aktualisiert wird, wobei das sanfte Bremsen ein Bremsen ist, bei dem der absolute Wert des Druckbefehl-Differentialquotienten über die Zeit ($dP_{cmd}/dt$) geringer als ein vorbestimmter Wert ist, der ferner weniger als die maximal zulässige Rate der Veränderung für einen Druck der Radbremse (22) für das Ventil (18, 26) beträgt.

**7.** Verfahren nach Anspruch 6, bei dem der vorbestimmte Wert ein Wert ist, der über den gesamten Betriebsdruckbereich für ein Bremssystem (12) fest ist, und/oder ein Wert ist, der sich mit Druckzuständen ändert.

8.  Verfahren nach Anspruch 7, bei dem die Druckzustände einen Druck einer Radbremse (22) und einen Druckunterschied über dem Ventil (18, 26) aufweisen.

9.  Verfahren nach einem der Ansprüche 1 bis 8, bei dem eine erste (50) und eine zweite (52) Abschätzungseinrichtung verwendet werden, um Grenzenabweichungen des ersten (18) und des zweiten (26) Ventils an jedem Kanal abzuschätzen.

10. Verfahren nach einem der Ansprüche 2 bis 9, bei dem das Vorzeichen des Druckbefehl-Differentialquotienten über die Zeit ($dP_{cmd}/dt$) dazu verwendet wird, zu bestimmen, ob eine erste (50) oder eine zweite (52) Abschätzungseinrichtung aktualisiert ist.

11. Verfahren nach einem der Ansprüche 1 bis 10, ferner aufweisend die folgenden Schritte:

    Bestimmen von Grenzwerten in einem ersten Bereich von Druckunterschieden für das Ventil (18, 26);
    Anwenden eines Modells auf die bestimmten Grenzwerte; und
    Abschätzen eines Grenzwerts für einen zweiten Bereich von Druckunterschieden über dem Ventil (18, 26).

12. Verfahren nach Anspruch 11, bei dem
    entweder die Druckunterschiede des ersten Bereichs oder die Druckunterschiede des zweiten Bereichs zwischen ca. 0 bar und ca. 50 bar betragen; und
    die jeweils anderen Druckunterschiede des ersten Bereichs und die Druckunterschiede des zweiten Bereichs zwischen ca. 50 bar und ca. 120 bar betragen.

13. Verfahren nach Anspruch 11 oder 12, bei dem ein Abschätzungsmodell, das beim Schätzen des Grenzwerts verwendet wird, auf einer linearen Funktion und/oder einer exponentiellen Funktion beruht.

14. Verfahren nach einem der Ansprüche 1 bis 13, bei dem, wenn die Schließgrenze aktualisiert wird, und zwar unter Verwendung der sich ergebenden Abschätzung der Schließgrenzenabweichung, die angewendete Korrektur gleich der Abschätzung der Schließgrenzenabweichung ist.

15. Verfahren nach einem der Ansprüche 1 bis 13, bei dem, wenn die Schließgrenze aktualisiert wird, und zwar unter Verwendung der sich ergebenden Abschätzung der Schließgrenzenabweichung, die angewendete Korrektur gleich einem Bruchteil der Abschätzung der Schließgrenzenabweichung ist.

16. Verfahren nach Anspruch 14, bei dem die Abschätzung der Schließgrenzenabweichung beruhend auf einer einzigen Bestimmung des Fehlers zwischen dem befohlenen Druck und dem festgestellten Druck berechnet wird.

17. Verfahren nach Anspruch 14 oder 15, bei dem das Grenzwertkorrekturverfahren jedes Mal durchgeführt wird, wenn das Drucksteuersystem betrieben wird.

18. Verfahren nach Anspruch 14 oder 15, bei dem die Grenzwertfehler für den Druckbereich mittels eines Durchlaufens des Drucks nach oben hin und/oder eines Durchlaufens des Drucks nach unten hin durch den Druckbereich bestimmt werden.

**Revendications**

1.  Procédé d'adaptation d'une limite de fermeture pour une première soupape (18) fonctionnant de manière à commander une pression appliquée à un canal dans un circuit hydraulique comprenant :

    la détection d'un signal de commande de pression ($P_{cmd}$) ;
    la détection d'une réponse de la première soupape (18) au signal de commande de pression ($P_{cmd}$) ;
    l'obtention d'une erreur de pression à partir d'une pression réelle ($P_b$) et du signal de commande de pression ($P_{cmd}$) ;
    le calcul d'une erreur de pression modifiée ($e_m$) sur la base de l'erreur de pression, et d'une erreur de pression stationnaire résultant d'une non adaptation de conditions de correction aval et d'une zone morte de commande ;
    la mise en oeuvre d'un estimateur (50, 52) pour estimer un écart de limite de fermeture de la première soupape (18) sur la base de l'erreur de pression modifiée ($e_m$) ; et

la mise à jour de la limite de fermeture en utilisant l'estimation résultante de l'écart de limite de fermeture.

**2.** Procédé selon la revendication 1 comprenant en outre l'adaptation d'une limite de fermeture pour une deuxième soupape (26) coopérant avec la première soupape (18) pour commander la pression ($P_b$) appliquée à un canal dans un circuit hydraulique incluant :

l'obtention d'une dérivée de commande de pression au fil du temps ($dP_{cmd}/dt$) ;
l'utilisation du signe de la dérivée de commande de pression au fil du temps ($dP_{cmd}/dt$) pour déterminer s'il faut mettre à jour la limite de fermeture de l'une de la première soupape (18) et de la deuxième soupape (26) ;
l'obtention de l'erreur de pression en soustrayant la pression réelle ($P_b$) de la commande de pression ($P_{cmd}$) ;
la mise en oeuvre de l'estimateur (50, 52) pour estimer l'écart de limite de fermeture de l'une de la première soupape (18) et de la deuxième soupape (26) sur la base de l'erreur de pression modifiée ($e_m$) ; et
la mise à jour de la limite de fermeture de l'une de la première soupape (18) et de la deuxième soupape (26) en utilisant l'estimation résultante de l'écart de limite de fermeture.

**3.** Procédé selon la revendication 1 ou 2, dans lequel le canal est un frein de roue (22) d'un véhicule motorisé, et la pression réelle est une pression réelle de liquide de frein au niveau du frein de roue (22).

**4.** Procédé selon l'une des revendications 1 à 3, dans lequel l'erreur de pression modifiée ($e_m$) pour la première soupape (18) a des signes alternés qui résultent d'une bande morte surcompensée et dans lequel les erreurs de pression modifiées ($e_m$) avec des signes alternés donnent une estimation d'écart de limite négative.

**5.** Procédé selon l'une des revendications 2 à 3, dans lequel l'erreur de pression modifiée ($e_m$) pour la deuxième soupape (26) a des signes alternés qui résultent d'une bande morte surcompensée et dans lequel les erreurs de pression modifiées ($e_m$) avec des signes alternés donnent une estimation d'écart de limite positive.

**6.** Procédé selon la revendication 3, dans lequel l'estimateur (50, 52) n'est mis à jour que pendant des manoeuvres de freinage doux, le freinage doux étant un freinage où la valeur absolue de la dérivée de commande de pression au fil du temps ($dP_{cmd}/dt$) est inférieure à une valeur pré-spécifiée qui est en outre inférieure au taux de changement maximum autorisé pour la pression de frein de roue (22) pour la soupape (18, 26).

**7.** Procédé selon la revendication 6, dans lequel la valeur pré-spécifiée est au moins l'une d'une valeur qui est fixée sur la totalité de la plage de pression opérationnelle pour un système de freinage (12) et d'une valeur qui varie avec les conditions de pression.

**8.** Procédé selon la revendication 7, dans lequel les conditions de pression comprennent une pression de frein de roue (22) et un différentiel de pression dans la soupape (18, 26).

**9.** Procédé selon l'une des revendications 1 à 8, dans lequel un premier (50) et un deuxième (52) estimateur sont utilisés pour estimer des écarts de limite de la première (18) et de la deuxième (26) soupape au niveau de chaque canal.

**10.** Procédé selon l'une des revendications 2 à 9, dans lequel le signe de la dérivée de commande de pression au fil du temps ($dP_{cmd}/dt$) est utilisé pour déterminer si un premier (50) ou un deuxième estimateur (52) est mis à jour.

**11.** Procédé selon l'une des revendications 1 à 10 comprenant les étapes de :

détermination de valeurs de limites dans une première plage de différentiels de pression pour la soupape (18, 26) ;
application d'un modèle aux valeurs de limites déterminées ; et
estimation d'une valeur de limite pour une deuxième plage de différentiels de pression dans la soupape (18, 26).

**12.** Procédé selon la revendication 11, dans lequel
l'une de la première plage de différentiels de pression et de la deuxième plage de différentiels de pression est d'environ 0 bar à environ 50 bars ; et
l'autre de la première plage de différentiels de pression et de la deuxième plage de différentiels de pression est d'environ 50 bar à environ 120 bars.

**13.** Procédé selon les revendications 11 ou 12, dans lequel un modèle d'estimation utilisé pour estimer la valeur de limite est basé sur au moins l'une d'une fonction linéaire et d'une fonction exponentielle.

**14.** Procédé selon l'une des revendications 1 à 13, dans lequel, lors de la mise à jour de la limite de fermeture en utilisant l'estimation résultante de l'écart de limite de fermeture, la correction appliquée est égale à l'estimation de l'écart de limite de fermeture.

**15.** Procédé selon l'une des revendications 1 à 13, dans lequel, lors de la mise à jour de la limite de fermeture en utilisant l'estimation résultante de l'écart de limite de fermeture, la correction appliquée est égale à une fraction de l'estimation de l'écart de limite de fermeture.

**16.** Procédé selon la revendication 14, dans lequel l'estimation de l'écart de limite est calculée sur la base d'une détermination unique de l'erreur entre la pression commandée et la pression observée.

**17.** Procédé selon la revendication 14 ou 15, dans lequel le procédé de correction de valeur de limite est mis en oeuvre à chaque fois que le système de commande de pression est utilisé.

**18.** Procédé selon la revendication 14 ou 15, dans lequel les erreurs de valeurs de limites pour la plage de pressions sont déterminées par au moins l'un d'un glissement de pression vers le haut et d'un glissement de pression vers le bas sur la plage de pressions.

FIG.1

Pressure

Pcmd

P$_B$

70

72

Time

$\mp$IG. 2

54

Ṗcmd

du/dt

K$_d$

Pcmd

$+$ $-$

e

K$_p$

$+$ $+$

K$_1$

55

K$_2$

1/s

Pb

$\mp$IG.3

# ⌐FIG. 4A

A pressure command signal is detected. — 101

A pressure command derivative over time is obtained. — 102

A pressure command signal is evaluated to determine whether a braking maneuver is gentle. — 103

The sign of the pressure command derivative over time is used to determine which estimator should be updated. — 104

A pressure error is calculated by subtracting an actual wheel brake pressure from the pressure command. — 105

To FIG. 4B

From FIG. 4A

A modified pressure error is calculated in such a way that steady state pressure error resulting from mismatched feed-forward term, control dead zone and other factors are subtracted from measured pressure error to leave the only error to be that due to boundary deviation.

106

Gain scheduling is used in the estimators to deal with potential asymmetry in mapping from boundary deviation to modified pressure error.

107

An estimator is used to estimate a boundary deviation of one of the apply valve and the release valve.

108

The boundary deviation is used to update the boundry table.

109

# FIG. 4B

Fig. 5

Fig. 6

```
                    ┌─────────────┐
                    │  Start of a │
                    │   cycle     │
                    └──────┬──────┘
                           │
                           ▼
                    ◇─────────────◇        301
            No    ◇   On=TRUE?     ◇
        ┌─────────◇               ◇──────── Yes
        │          ◇─────────────◇           │
        │                                     ▼
        │       Yes                    ◇─────────────◇      302
        │◄──────────────────────────◇  Segment      ◇
        │                            ◇  Change?      ◇
        │                             ◇─────────────◇
        │                                    │ No
        ▼                                    ▼
  ┌──────────────┐                  ┌──────────────────┐
  │  Resetting   │                  │   Updating        │
  │ Intermediate │                  │ Self_Cal_Data[]   │
  │  Variables   │                  └──────────────────┘
  └──────────────┘
```

303 — Resetting Intermediate Variables

304 — Updating *Self_Cal_Data*[]

305 — *On* OR *Self_Cal*=FALSE?

No → Set Boundary Adjustment *State* to 0 (306)

Yes → Calculation of Boundary Adjustment *State*, based on *Self Cal Data*[ ] (307)

End of the cycle

Fig. 7

Deriving an iterative equation that gives a calculated correction to a boundary value component in a pressure control system based on an error between commanded pressure and observed pressure ⌐ 501

Observing an error between the commanded pressure and the observed pressure that is attributable to boundary value error ⌐ 502

Calculating a value of the error between the commanded pressure and the observed pressure 503

Applying a correction in the amount of a fraction of the calculated error to the boundary value component of the pressure control system 504

Fig. 8

Deriving a non-iterative equation that gives a calculated correction to a boundary value component in a pressure control system based on an error between commanded pressure and observed pressure — 601

Observing an error between the commanded pressure and the observed pressure that is attributable to boundary value error — 602

Calculating a value of the error between the commanded pressure and the observed pressure — 603

Applying a correction in the amount of the calculated error to the boundary value component of the pressure control system. — 604

Fig. 9

Determining boundary values in a first
range of pressure differentials for a valve   — 701

Applying a model to the determined
boundary values   — 702

Estimating a boundary value for a second
range of pressure differentials across the
valve.   — 703

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6086167 A, Heckmann
- US 6030055 A
- EP 0233360 A2
- DE 19936269 A1